# EUROPEAN PATENT SPECIFICATION

(11) **EP 1 763 963 B1**
(45) Date of publication and mention of the grant of the patent: **15.05.2013**
(21) Application number: 05851710.3
(22) Date of filing: 17.11.2005
(51) Int. Cl.: H04W 8/04, H04W 60/04

(54) **Border roaming gateway**
Grenz-Roaming Gateway
Passerelle frontière d'itinérance

(30) Priority: 18.11.2004 US 629063 P
(43) Date of publication of application: 21.03.2007
(73) Proprietor: Roamware, Inc., Cupertino, CA 95014 (US)
(72) Inventor: Jiang, Yeu Jun, Legal Department Roamware, INC., San Jose, CA 95128 (US)
(74) Representative: Wallis, Helen Frances Mary
(86) International application number: PCT/US2005/041517
(87) International publication number: WO 2006/055629

(56) References cited:
- WO-A-2004/014101
- US-A1- 2002 012 351
- US-A1- 2004 087 305
- US-A1- 2004 224 680

## Description

### Related Application

This application claims priority from United States Provisional Patent Application Serial No. 60/629,063 entitled Border Roaming Gateway for International and National Border Roaming Registration Issues, filed November 18, 2004.

### Technical references

GSM 902 on MAP specification
Digital cellular telecommunications system (Phase 2+);
Mobile Application Part (MAP) Specification
(3GPP TS 09.02 version 7.9.0 Release 1998)

GSM 408 on radio interface layer 3
Digital cellular telecommunications system (Phase 2+);
Mobile radio interface layer 3 specification
(GSM 04.08 version 7.4.2 Release 1998)

GSM 340 on SMS
Digital cellular telecommunications system (Phase 2+);
Technical realization of the Short Message Service (SMS);
(GSM 03.40 version 7.4.0 Release 1998)

GSM 378 on CAMEL
Digital cellular telecommunications system (Phase 2+);
Customized Applications for Mobile network Enhanced Logic (CAMEL) Phase 2;
Stage 2
(GSM 03.78 version 6.7.0 Release 1997)

GSM 978 on CAMEL Application protocol
Digital cellular telecommunications system (Phase 2+);
Customised Applications for Mobile network Enhanced Logic (CAMEL);
CAMEL Application Part (CAP) specification
(GSM 09.78 version 7.1.0 Release 1998)

GSM 322 network selection
Digital cellular telecommunications system (Phase 2+);
Functions related to Mobile Station (MS)
in idle mode and group receive mode
(GSM 03.22 version 8.3.0 Release 1999)

GSM 23122 network selection
3GPP TS 23.122 V3.9.0 (2002-12)
*Technical Specification*
3rd Generation Partnership Project;
Technical Specification Group Core Network;
NAS Functions related to Mobile Station (MS) in idle mode
(Release 1999)

GSM 22011 service accessibility
3GPP TS 22.011 V3.8.0 (2002-09)
*Technical Specification*
3rd Generation Partnership Project;
Technical Specification Group Services and System Aspects;
Service accessibility
(Release 1999)

3GPP 29010
3GPP TS 29.010 V3.10.0 (2002-12)
*Technical Specification*
3rd Generation Partnership Project;
Technical Specification Group Core Network;
Information element mapping between Mobile Station - Base Station System (MS - BSS) and Base Station System - Mobile-services Switching Centre (BSS - MSC);

Signalling procedures and the Mobile Application Part (MAP)
(Release 1999)

Q1214-Q1218 On Intelligent Networks

Q701-704 on SS7 MTP

Q711-Q714 on SS7 SCCP

### Field of the Invention

The present invention relates to registration of mobile devices at a border of two overlapping wireless cellular networks.

### Background of the Invention

Many home networks overlap with either national roaming partners (e.g. different provinces) within the same country or international roaming partners at the borders of neighboring countries. As a result, at the borders of a Home Public Mobile Network (HPMN), subscribers are often unaware that they have moved on to register at a Neighboring Visited Public Mobile Network (NPMN) where hefty roaming rates and international call charges might be applied and phone book entries in the national dialing pattern will not work. For better services, customer care and cost reduction for both home network operators and subscribers, home networks would prefer to retain their own customers whenever their networks have coverage.

To retain customers and provide better services, the HPMN can build transmission towers to cover the border areas. However, in addition to this being an expensive proposition, there might be regulations for limiting power transmission in the border areas of the NPMN.

Another solution is to rely on an HPMN timer. Currently, when a mobile phone switches on or recovers from a loss of coverage, following standard practices, it always looks for the last registered network first; failing that, it tries to locate the HPMN, and then tries to register with other networks. Once the mobile phone is registered with an NPMN after power on, it looks for the HPMN based on the HPMN timer for the next two minutes to T*6 minutes (where T is the operator set counter in the Subscriber Identity Module (SIM)) and t hen e very T*6 m inutes afterwards. The minimum T value in the HPMN timer in the SIM is 1. The default is 5. Thereafter, if the mobile is yet registered with the NPMN, it looks for the HPMN every T*6 minutes.

Unfortunately, this method wastes time looking for the HPMN, if the handset registers already with the NPMN even though T can be set as low as 1 and it still takes 6 minutes. Further, if it is the same HPMN spanned across several provinces (e.g. China, India), the HPMN timer might not be applicable. The HPMN timer will also not be useful in the case of international border roaming; since the handset will only look at the HPMN timer if it is on the networks of the same country as the HPMN.

Thus there is a need for an alternative approach to solve the border roaming registration that complements the use of the transmission signals and the HPMN timers. Further, t here is a n eed t o i nvent a t echnique t hat c an e xamine R egistration M essages (RM) of the HPMN subscribers on the NPMN border Visited Mobile Switching Centre (VMCS) and cells, and modify the signaling to effect a change on the search of networks in favor of the HPMN for the HPMN mobiles that are in an automatic search mode.

### Brief Description of Drawings

In the drawings, the same or similar reference numbers identify similar elements or acts.
FIG. 1 illustrates a region having an HPMN being surrounded by a plurality of NPMNs at a border area.
FIG. 2 illustrates a generalized block diagram of a signal message transmission between two networks in wireless cellular networks when an HPMN subscriber moves to a border NPMN.
FIG. 3 illustrates a block diagram of an embodiment of the invention using a Signalling Connection Control Part (SCCP) redirection-based interception approach.
FIG. 4 illustrates a flowchart of an embodiment of the invention using a SCCP redirection-based interception approach.
FIG. 5 illustrates a block diagram of an embodiment of the invention using an IN trigger interception approach.
FIG. 6 illustrates a flowchart of an embodiment of the invention using an IN trigger interception approach.
FIG. 7 illustrates a block diagram of an embodiment of the invention using a monitoring-based approach to determine the location of the subscriber to decide whether to apply for rejection approach or not.
FIG. 8 illustrates a block diagram of an embodiment of the monitoring-based approach.
FIG. 9 illustrates a block diagram of another embodiment of the monitoring-based approach.
FIG. 10 illustrates a flowchart of an embodiment of the invention using a monitoring-based approach.
FIG. 11 illustrates a flowchart of an embodiment of the invention using an accept first approach.

### Detailed Description

A method and system are described for detecting and registering an HPMN subscriber, who has moved onto an NPMN, back to the HPMN once the HPMN subscriber is detected as being registering with an NPMN even though the HPMN may be present, or an NPMN, with which the HPMN has entered into a contract, could be present in that area. Various embodiments of the invention include an in-signaling path approach that can be applied to determine the location of the subscriber, and thereby decide whether to apply a rejection approach or not. Various embodiments of the invention also include an Intelligent Networks (IN) trigger (e.g. Global System for Mobile communication (GSM) Customized Applications for Mobile network Enhanced Logic (CAMEL) and GSM Intelligent Network Application Part (INAP)) interception approach to determine the location of the subscriber, and thereby decide whether to apply the rejection approach or not. Various embodiments of the invention even further include a monitoring-based approach that can be applied to determine the location of the subscriber, and thereby decide whether to apply the rejection approach or not. An Appendix includes an explanation of numerous acronyms used herein and is included below for reference. Therefore, the acronyms used may not be spelled out in the body of the document.

The embodiments described can be used as a complement to existing transmission signals and the HPMN timers. More than one approach can be combined to enhance the user experience.

The term subscriber is used herein to indicate a user that registers with a network. The s ubscriber that registers with a network c an b e any combination of hardware and software capable of registering on a wireless network, e.g., a personal digital assistant (PDA) or a personal computer (PC). The term home network may refer herein to an NPMN. Similarly, the term neighboring network may refer herein to an NPMN. The term cell may be used herein to indicate a broadcasting base antenna in an HPMN or NPMN. The term NPMN VMSC may be used herein to indicate a VMSC being located in a neighboring network. Similarly, the term HPMN VMSC may be used herein to indicate a VMSC located in a home network. The terms such as border VMSC and border cell-id may herein be used to indicate a VMSC and a cell respectively that are located at the border of two wireless cellular networks. The term HPMN cell-id may be used to indicate a cell-id in a home network. Similarly, the term NPMN cell-id may be used to indicate a cell-id in a neighboring network. The methods and system described apply to any network entity that can register with one of several networks.

The present invention provides for network monitoring and interception in a region containing overlapping wireless cellular networks. The present invention relates to attempting re-registering a subscriber to an HPMN by detecting a potential registration of the subscriber with an NPMN at a border area with the HPMN, when the HPMN may be present in the region, in response to a registration request from the NPMN. A detection block detects the potential registration of the subscriber w ith the NPMN at the border area with the HPMN. Upon successful detection of the potential registration of the subscriber with an NPMN at a border area with the HPMN, a processing block attempts to reject registration of the subscriber with the NPMN. The registration request is rejected a pre-defined number of times to enable the handset to look for alternative networks, including, possibly, the HPMN. The details of the rejection approach include the methods taught in previous filings (US 60/401,362, WO 2004/014101, EP 1527653). The rejection approaches described in aforesaid patents involve first detecting that the subscriber is roaming in another network. The approaches also share various databases of information that is be used to make traffic redirection decisions and will be described in more detail later on.

The detection of potential registration of the HPMN subscriber at the border includes determining whether the subscriber is located at a border NPMN VMSC. Further, it is determined whether the subscriber was located at a border HPMN VMSC prior to moving to a border NPMN VMSC.

In an embodiment of the invention, the location information can comprise of identification of a border VMSC or a border cell-id. In another embodiment, the location information can be based upon a location technology such as Global Positioning System (GPS). In yet another embodiment, the location information can be based upon Time Difference Of Arrival (TDOA).

The invention maintains an overlap database at the HPMN that stores various levels of relationships about overlap of network coverage between the HPMN and the NPMNs. In one embodiment of the invention, the overlap database contains one to one mapping relationship between an NPMN VMSC and an HPMN VMSC.

In another embodiment of the invention, the overlap database contains one-to-one mapping relationship between an NPMN cell-id and an HPMN cell-id.

In yet another embodiment of the invention, the overlap database contains mapping relationship between any two of the following: an NPMN VMSC, an HPMN VMSC, an NPMN cell-id and an HPMN cell-id. The relationship can further include mapping between a border HPMN VMSC and an NPMN border cell-id. The relationship can also include mapping between a border NPMN VMSC and an HPMN border cell-id. The border cell information is optional, although, it is preferable to include it in the overlap database.

All the border overlap relationships are useful because the current cell id or the previous cell-id might not be known using information available from different location determination technologies, e.g. GPS, TDOA etc. If such a relationship containing cell-id, cannot be established, a higher level (more coarse grained) relationship will be used. For example, if the NPMN VMSC and the HPMN cell-id relationship is known, then that level of relationship can be used.

Optionally, relationships between the NPMN cell-id to nothing (or the NPMN VMSC to nothing) can be maintained if the roamer is at an NPMN cell (or VMSC), which is considered to be a border cell (or VMSC) irrespective of the invention determines his location.

Optionally, the detection of potential registration of the HPMN subscriber at the border includes determining whether the HPMN subscriber was located at a border HPMN cell prior to moving to a border NPMN VMSC, or, the subscriber was located at another border NPMN cell in the same NPMN V MSC prior to moving to the current border NPMN cell.

Once the detection block confirms the receipt of the potential registration of the HPMN subscriber from a bordering NPMN VMSC, the rejection or the cancellation approach is initiated by the processing block with an expectation to register the subscriber back to the HPMN. The registration request can be rejected by the processing block a pre-defined number of times ranging between one and infinity. In an embodiment, the rejection approach includes many methods elaborated in a previous filing (US 60/401,362, WO 2004/014101, EP 1527653), entitled "Method and System for Cellular Network Traffic Redirection" assigned to ROAMWARE INC and incorporated herein by reference.

The registration rejection traffic redirection embodiments of registration rejection traffic redirection involve rejecting the first round of Update Location messages when the handset is trying to register on the VPMN, so that the handset starts searching for a new network. The registration rejection methods include the following components: detecting the network the roamer i s currently on; the TR application logic deciding whether the registration process should be allowed to succeed or rejected; if the network is to be rejected, various approaches are taken to reject the Update Location with various error codes or to send a subscriber profile with information that makes the handset search for a new network; if a preferred network is not found, the TR application logic can decide that the user should be provided service on any available network, and hence registrations on non-preferred networks are also allowed to go through; a mechanism to initiate Update Location on demand is also provided, and this can be used to make the handset trigger an Update Location periodically; in some embodiments, it is determined whether the handset is in manual or automatic network selection mode; and it is also determined whether the handset is in midst of a voice or GPRS/MMS session.

In an embodiment an active TR approach can be applied. In the active TR approach, a TR node, as described in the aforesaid patents, is located in a signaling path between NPMN VLR and HPMN HLR to determine the network a subscriber is registered with.

In another embodiment a passive TR approach can be applied. In the passive TR approach, a TR node, as described in the aforesaid patents, monitors a signaling path between HPMN and a communication channel to determine the network a subscriber is registered with. Hereinafter, the rejection approaches discussed include any of the aforesaid approaches. However, the rejection approaches are not limited to the same.

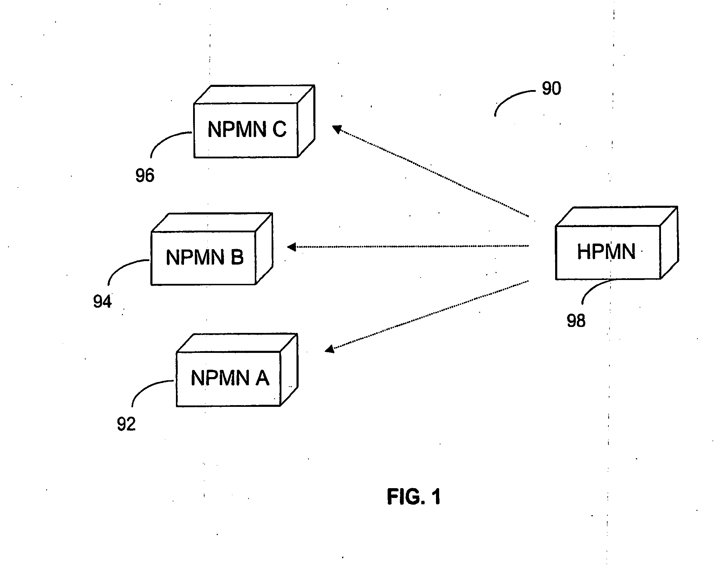

FIG. 1 illustrates a region 90 representing different networks present at a border area of neighboring provinces. The border area may contain an HPMN being surrounded by a plurality of NPMNs. Accordingly an HPMN 98 could be surrounded by multiple NPMNs 92, 94 and 96. Since the networks are present in the same border area, due to proximity of distance, the NPMNs 92, 94 or 96 might overlap with the HPMN 98. A subscriber, who is registered with the HPMN 98 while being at the border, might unknowingly move on to register with either of the NPMNs 92, 94 or 96.

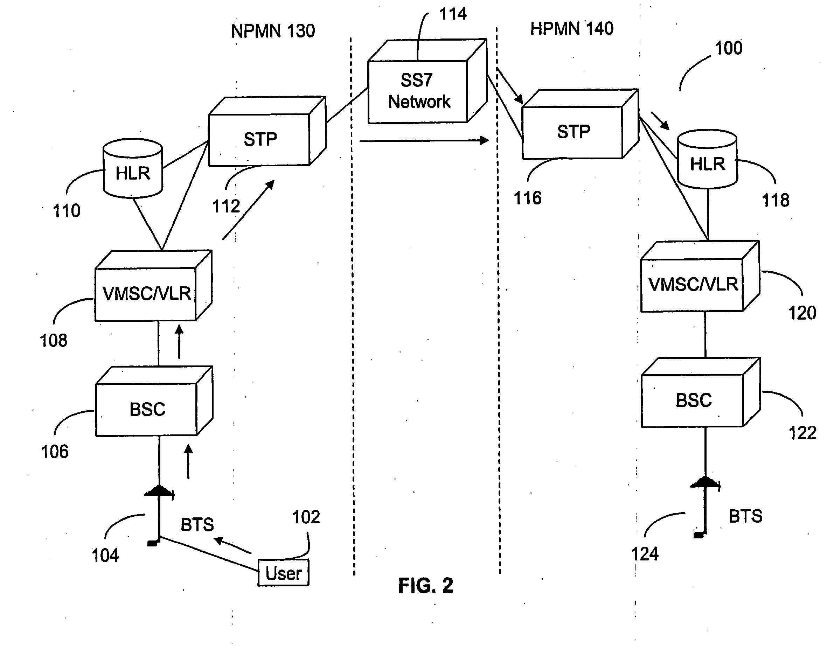

FIG. 2 illustrates a generalized block diagram 100 representing a registration procedure for a subscriber while he has moved to a neighboring network in a wireless cellular network, for example GSM. The block diagram 100 represents two networks, an NPMN 130 and an HPMN 140 that communicate with each other using a communication channel for example, SS7 network 114, to establish calls/update information of a subscriber when the subscriber moves from the HPMN 140 to the NPMN 130.

The NPMN 130 or the HPMN 140 includes Base Station Controller (BSC), Base Transceiver Station (BTS), Visited Mobile services Switching Centre/ Visitor Location Register (VMSC/VLR), Home Location Register (HLR) and Signal Transfer Point (STP). Although the NPMN 130 or the HPMN 140 will be described using the aforesaid elements, several other elements exist in the HPMN 140 or the NPMN 130 and are not included in the description for the sake of clarity in the description.

The NPMN 130 or the HPMN 140 contains at least one Base Station Controllers (BSCs) which control a plurality of cells, each cell being served by one fixed transmitter, normally known as a Base Transceiver Station (BTS). The cells are typically used to cover different areas in order to provide radio coverage over a wide area. The cellular networks are inherently asymmetric, with a set of fixed main transceivers each serving a cell and a set of distributed (generally, but not always, mobile) transceivers which provide services to the network's users, known as a VMSC. The VMSC acts as an interface for a cell of one network to communicate with another network. The VMSC provides functions normally including, without limitation, call control, channel signaling and switching functions, and a VLR. A VLR is a database containing temporary information about subscribers. The temporary information in the VLR is used by the VMSC to service visiting subscribers. Hereinafter, the VMSC is referred to as a VMSC/VLR denoting the VLR can be an integral part of the VMSC.

The NPMN 130 or the HPMN 140 further consists of a HLR which is used for storage and management of subscriptions. The HLR is an important database, as it stores permanent data about subscribers, including a subscriber's service profile, location information, and activity status. When a user subscribes to a network, the subscriber is registered in the HLR of that particular network.

The NPMN 130 or the HPMN 140 further consists of a STP, which is a node that provides for transfer of signalling messages from a network, namely the NPMN 130 or the HPMN 140, to a communication channel 114. The STP routes the signaling messages to the HLR and the VMSC/VLR.

When an HPMN subscriber 102 is present at a border area where the signals of the HPMN 140 as well as the NPMN 130 overlap, the subscriber 102 may get registered with the NPMN 130. The subscriber is a "home" subscriber from the perspective of the HPMN 140 while he is a "visiting" subscriber from the perspective of the NPMN 130.

Conventionally, when the subscriber 102 is to be registered with the NPMN 130, the subscriber 102 is identified by an NPMN BTS 104 upon reception of a unique identification emitted by a handset of subscriber 102. Once the subscriber is identified at the NPMN 130, the NPMN BSC 106 serves as a physical link between the NPMN BTS 104 and the NPMN VMSC/VLR 108. The NPMN VMSC/VLR 108 interacts with the HPMN HLR 118 to obtain information of the subscriber 102for handling c all request. The communication between the NPMN VMSC/VLR 108 and the HPMN HLR 118 is facilitated by an NPMN STP 112 and an HPMN STP 116 via SS7 network 114 and is completed before any call is placed or received by the subscriber 102.

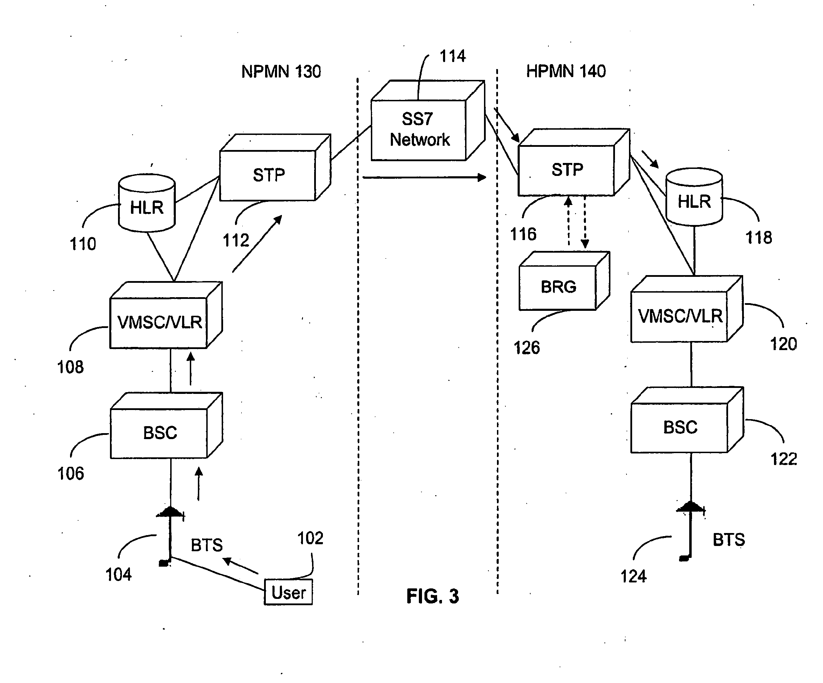

FIG. 3 is a block diagram of an embodiment of the invention illustrating a SCCP redirection-based interception approach using a Border Roaming Gateway (BRG) 126. The BRG 126 is connected to the HPMN STP 116 for. receiving and processing registration message to enable initiation of a rejection approach. When the subscriber 102 moves in to register with the NPMN 130, a registration message is relayed by the NPMN VMSC/VLR 108 as described with respect to FIG 2.

Embodiments of the invention contemplate various approaches to route the registration message to the BRG. The following approaches are not meant to be an exhaustive list. In one embodiment, the HPMN STP 304 is configured such that it directs all the messages to the BRG. In an alternate embodiment, the HPMN STP 116 is configured to send all the E214 messages to the BRG. In yet another embodiment, all Mobile Application Part (MAP) Location Update (LUP) messages using a non-zero Translation Type are sent by the NPMN to the BRG.

The BRG 126 intercepts the registration message from the NPMN VLR/VMSC 108. Optionally, before the registration message is intercepted by the BRG 126, the HPMN STP examines the Calling Party Address (CgPA) of the registration message. Depending upon whether the registration message is received from the NPMN border VMSC/VLR 108, the SCCP HPMN STP 116 directs SCCP based messages to the BRG 126 or the HPMN HLR 118. However, if the SCCP routing the HPMN STP 116 is not able to route the message based on specific CgPA prefixes denoting the NPMN networks, it would redirect all the roaming E214 Called Party Address (CdPA) messages to the BRG 126.

The BRG 126 determines if the message is a registration message which is received from a border NPMN VMSC/VLR 108, and that the subscriber was originally at a border HPMN VMSC/VLR 120, and if possible but not necessary, the previous cell at the HPMN is a bordering cell to the NPMN VMSC 108 or a previous cell at the NPMN is a border cell at the same NPMN VMSC 108. If the check is successful, the BRG 126 starts a rejection approach; else, the BRG 126 redirects the message to the SCCP HPMN STP 116 (with a different translation type or with the real Destination Point Code (DPC) of the HLR of the E214 CdPA based message) which relays it back to the HPMN HLR 118. The subscriber's handset can retry registering with the HPMN using the rejection approach. The BRG 126 will continue the rejection approach of the same NPMN network up to 4 times with an expectation to get the subscriber to register back with the HPMN when the handset selects an alternative network as the NPMN is rejected.

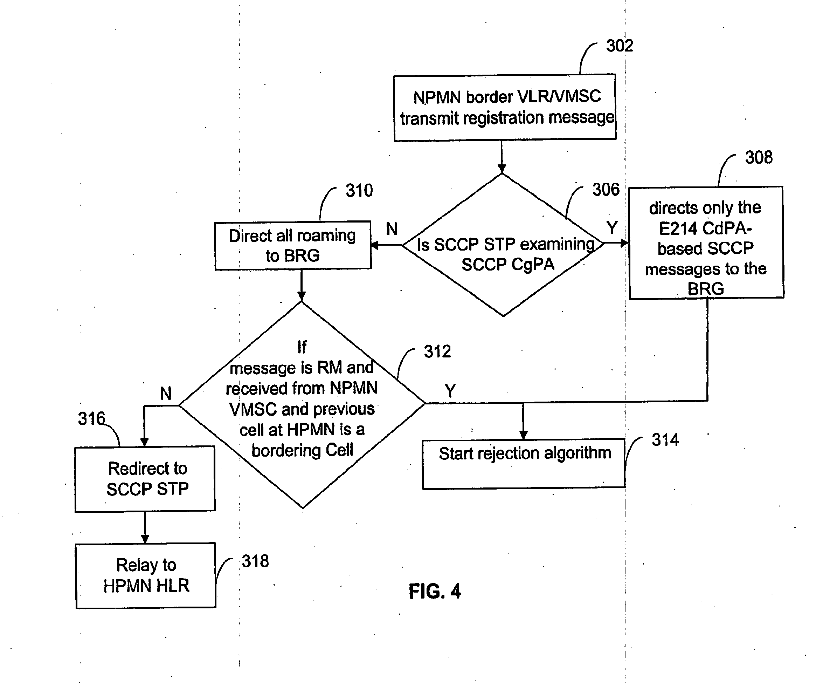

FIG. 4 is a flowchart of an embodiment of the invention illustrating a SCCP redirection-based interception approach. When a subscriber is detected to register with an NPMN, a registration message is sent by an NPMN border VMSC/VLR at step 302. At step 306, an optional check is made to determine if a SCCP STP examines CgPA of the registration message. In case the SCCP HPMN STP examines the CgPA, the SCCP directs only the E214 CdPA-based SCCP messages to the BRG if the subscriber is in the NPMN, at step 308. The BRG initiates rejection approach, as described in the former part of the detailed description, of the NPMN at step 314.

If the SCCP HPMN STP does not examine the CgPA, it will direct all the roaming E214 C dPA-based S CCP m essages to the B RG at step 310. At step 312, the BRG determines if the message is a registration message (e.g. MAP LUP) and if it is received from the NPMN border VMSC/VLR. It also checks if the subscriber was originally at a border HPMN VMSC/VLR. Additionally, it may determine if the previous cell at the HPMN is a bordering cell to the NPMN VMSC, or if a previous cell at the NPMN is a border cell at the same NPMN VMSC. If the check is successful, the BRG starts the rejection approach at step 314. The BRG will continue the rejection approach of the same network up to 4 times with an expectation to get the subscriber to register back with the HPMN when the handset selects an alternative network as the NPMN is rejected.

If the check is unsuccessful, the BRG redirects the message back to the SCCP HPMN STP at step 316. The redirected message may contain a different translation type or a real DPC of the HLR of the E214 CdPA-based message. The redirected message received by the SCCP HPMN STP is relayed back to the HPMN HLR in step 318 and the HPMN HLR is updated.

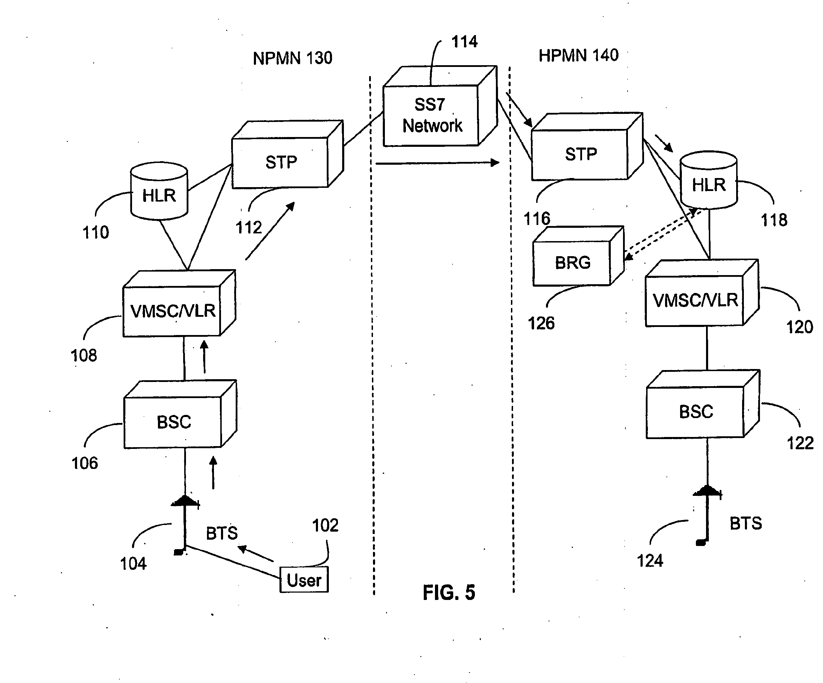

FIG. 5 is a block diagram of an embodiment of the invention illustrating an Intelligent Network (IN) trigger interception approach. In an embodiment of the IN trigger interception approach; GSM Intelligent Network Application Part (INAP) can be employed. Alternately, GSM Customized Applications for Mobile network Enhanced Logic (CAMEL) can be used in the Intelligent Network (IN) trigger interception approach.

When the subscriber 102moves in to register with an NPMN, a registration message is relayed by the NPMN VMSC/VLR 108. Each time a subscriber's registration message is being registered with the HPMN HLR 118, the HPMN HLR 118 sends a control trigger to the BRG 126. The BRG 126 processes the registration message to determine if the subscriber was in an HPMN border cell, provided the cell location information is not too old, and, accordingly directs the HPMN HLR 118 to abort / accept the registration message. To find out if the subscriber was in an HPMN border cell, each border HPMN VMSC/VLR is equipped with, but not limited to, triggers such as IMSI attach; periodic location update, intra-VLR location update and inter-VLR location update. These triggers, when triggered, pass the cell location information to the BRG 126. The time such information is obtained determines the aging of the location information.

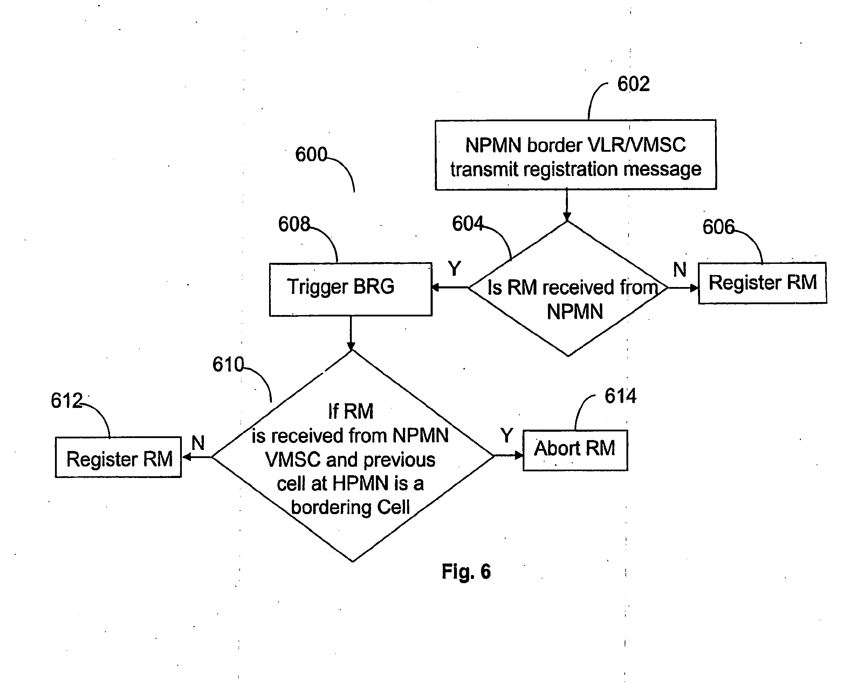

FIG. 6 is a flowchart of an embodiment of the invention illustrating the steps involved in an IN trigger interception approach 600. When a subscriber is registered with an NPMN, a registration message is sent by an NPMN border VMSC/VLR to an HPMN HLR at step 602. At step 604, the HPMN HLR determines if the registration message is received from an NPMN VMSC/VLR. If the message is received from the NPMN VMSC/VLR, the HPMN HLR sends a trigger to the BRG at step 608. Otherwise, the HPMN HLR registers the message at step 606.

At step 610, the BRG determines if the registration message is received from the NPMN b order V MSC/VLR, a nd that the s ubscriber w as o riginally a t a border H PMN VMSC/VLR, and if possible but not necessary, the previous cell at the HPMN is a bordering cell to the NPMN VMSC or a previous cell at the NPMN is a border cell at the same NPMN VMSC. If the check is unsuccessful, the BRG asks the HPMN HLR to continue the registration at step 612 else it asks the HPMN HLR to abort the registration at step 614. In an embodiment of the invention, the registration can be aborted using MAP ABORT command. If the registration is aborted, the subscriber's handset is expected to retry registration. The BRG will continue to ask the HLR for the rejection/abort of the registration of the same NPMN network up to four times with an expectation to get the subscriber to register back with the HPMN when the handset attempts registration.

In either of the aforesaid approaches and embodiments, a rejection error such as system-failure, missing parameter, unexpected data value, time out, roaming not allowed, roaming restricted etc. is sent, where applicable, to enable the handset to check if a registration for the HPMN is possible. If the registration for the HPMN is not possible, the subscriber can be granted to register with the NPMN. Additionally, the intercept approaches can dynamically find out a cell-id of the subscriber's previous location at home by issuing a MAP Any Time Interrogation (ATI) on an International Mobile Subscriber Identity (IMSI) c ommand to the H LR, which in turn issues a M AP Public Subscriber Information (PSI) to the VLR, if the network supports it. However, several other location methods can be used to determine the cell-id.

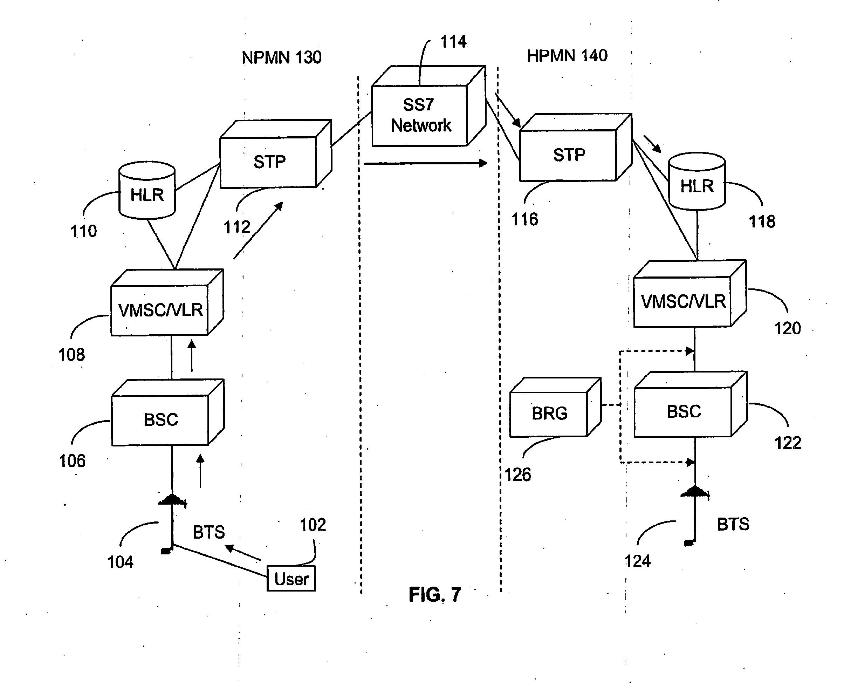

FIG. 7 is a block diagram of an embodiment of the invention, illustrating a monitoring-based approach to determine the location of the subscriber to decide wether to apply for traffic redirection or not. In this approach, the BRG 126 monitors the registration message between the border NPMN VMSC/VLR 108 and the HPMN HLR 118. A registration message is sent from the NPMN VMSC/VLR 108 to the HPMN STP 116. The HPMN STP 116 further directs the message to the HPMN HLR 118. This is achieved by tapping SCCP links from border VMSC/VLR links. The message sent by the NPMN VMSC/VLR 108 can be MAP LUP (Location Update) and MAP CancelLoc (Cancel Location).

The BRG 126 is connected between the HPMN VMSC/VLR 120 and the HPMN BTS 124 and monitors the registration message to obtain the cell-id of the subscriber at the HPMN prior to the subscriber's attempt to register with an NPMN at the border.

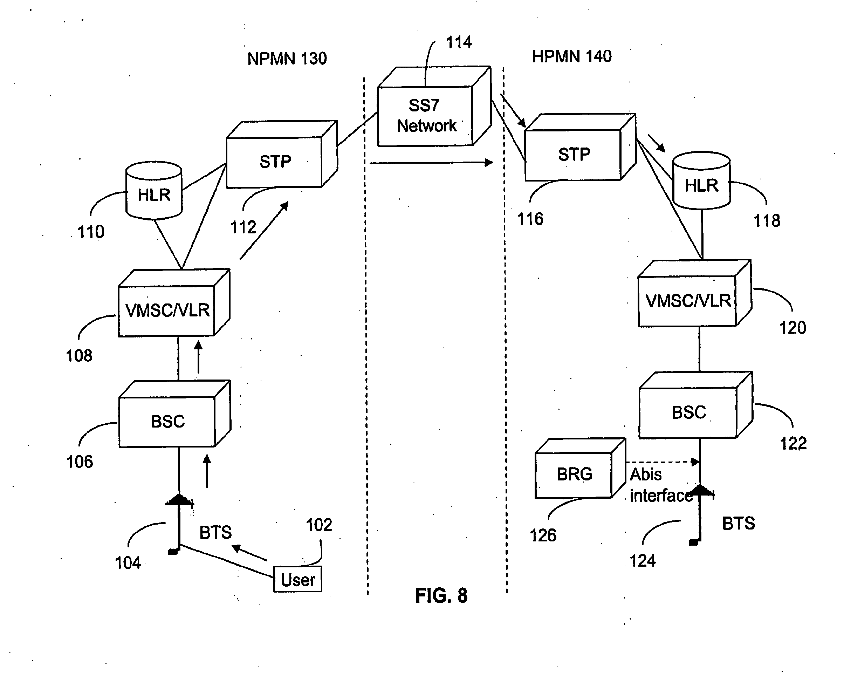

In another embodiment of the monitoring-based approach, as shown in FIG. 8, the BRG 126 taps registration messages between the HPMN BSC 122 and the HPMN BTS 124 using an Abis interface between the HPMN BSC 122 and the HPMN BTS 124. Abis interface uses Link Access Protocol on the D Channel (LAPD) links which helps in tracking the subscriber real location cell-id.

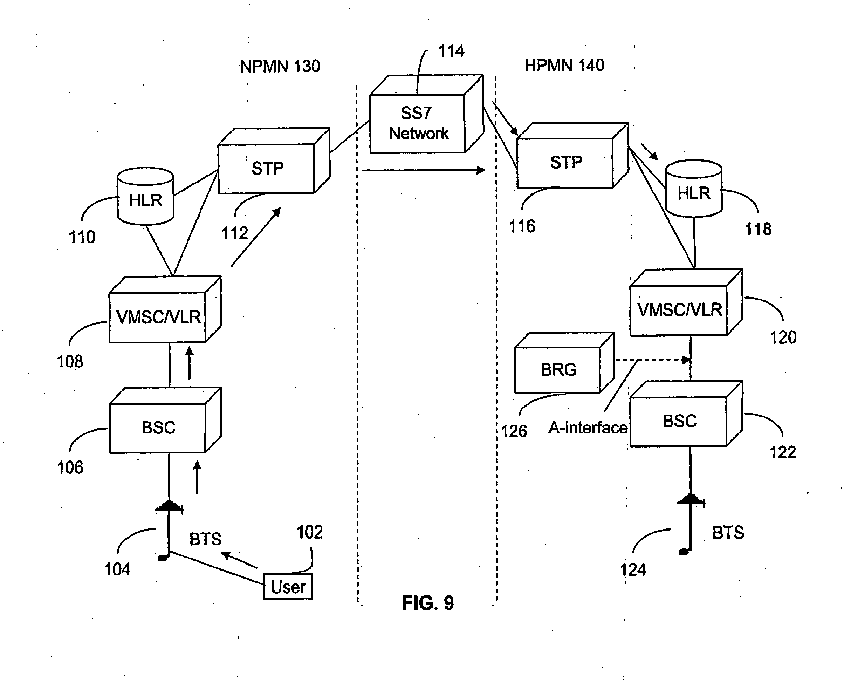

In yet another embodiment of the monitoring-based approach, as shown in FIG. 9, the BRG 126 taps registration messages between the HPMN VMSC/VLR 120 and the HPMN BSC 122 using an A-interface between the HPMN VMSC/VLR 120 and the NPMN BSC 122.

In yet another embodiment of the monitoring-based approach, when a subscriber is determined to be at an NPMN border cell via MAP PSI on an International Mobile Subscriber Identity (IMSI) after border location update of the subscriber, an overlap database registers the subscriber location information. In this scenario, the previous cell id is available to the BRG without the need to issue an ATI command to the HPMN HLR. The subscriber location information contained in a record in the overlap database is removed, if a registration message of the subscriber received from an NPMN is rejected. However, if the subscriber moves to a nother H PMN b order cell, a new record can be created in the overlap database.

The PRI response provides the aging information of the cell-id. By the time a rejection approach is applied, the cell-id information of the PSI method used by BRG monitoring at the HPMN border VLR/VMSC may be old as the subscriber might be roaming in a VPMN network. Therefore, the cell-id in the VLR would not be updated until an aging response is sent. To update the VLR occasionally, an SMS ping can be sent by the system periodically, followed by a PSI, to obtain the latest cell-id from the aging response. In other embodiments, other ways of updating the VLR can be used.

In either of the embodiments of the monitoring-based approach, the border HPMN VMSC/VLR would allow cell location information to be captured. In addition to monitoring a border VMSC/VLR or a border cell links of the HPMN, the BRG can also monitor the registration messages between a border VMSC/VLR and a b order B SC at each NPMN. This can be achieved by tapping the interconnecting SCCP links between the NPMN and the HPMN and/or by tapping the NPMN border VLR/VMSC SCCP links and/or just international roaming links. As soon as the BRG determines that the mobile registers in a border area of an NPMN, it sends registration rejection to enable mobile to possibly switch back to the HPMN. This approach while particularly helpful when the HPMN has multi-provincial coverage map (e.g. China Mobile), is not restricted to such a case.

In either of the monitoring based approach embodiments, when the BRG 126 monitors the registration message at a VPMN, it first determines if the current VMSC/VLR is a border NPMN VMSC/VLR 108. If it is, the BRG then checks whether the previous cell the subscriber is at an HPMN border cell (provided the aging information of the cell is not too old) and that cell is bordering the NPMN VMSC/VLR where the subscriber is at the moment. If the BRG 126 passes all the checks, it will initiate a registration rejection approach. In order to register the subscriber back to the HPMN, the BRG sends a rejection error such as system-failure, unexpected data value, missing parameter, roaming not allowed, or a combination of rejection errors where applicable, to let the handset to switch to another network to check if an alternative registration for the HPMN is possible. If an alternate registration is not possible, the BRG 126 will grant the subscriber to register with the NPMN after a predefined number of registration requests.

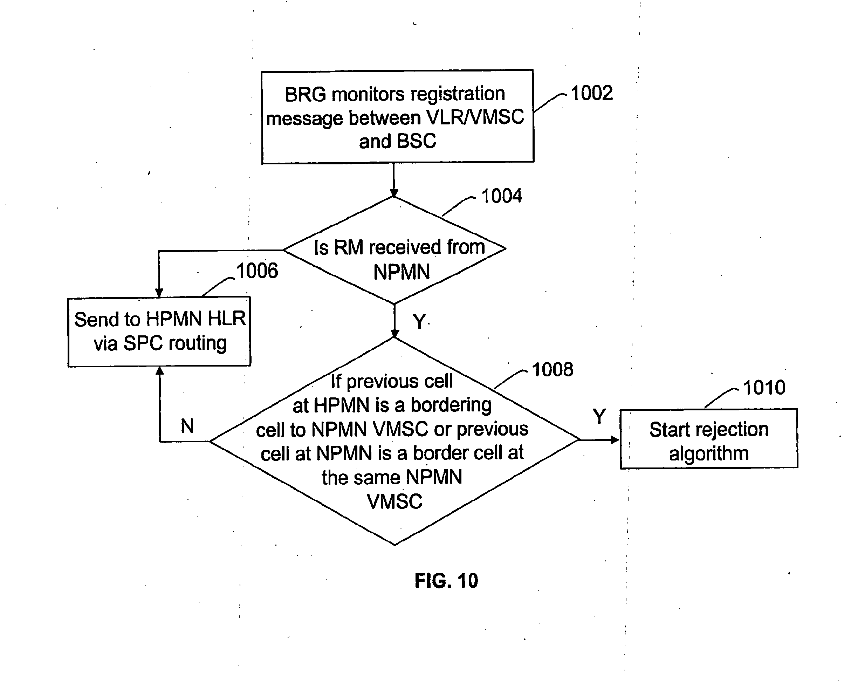

FIG. 10 is a flowchart of an embodiment of the invention illustrating the steps involved in monitoring-based approach to determine the location of a subscriber to decide whether to apply a rejection approach or not. At step 1002, a BRG monitors the registration message between an HPMN VMSC/VLR and an NPMN HLR to obtain the cell id of the subscriber at the HPMN before the subscriber is registering to a border NPMN. At step 1004, the BRG determines if the current VMSC/VLR is a border NPMN VMSC/VLR or not. If the current VMSC/VLR is not a border NPMN VMSC/VLR, a SPC routing directs the registration message to the HPMN HLR to update a record in an overlap database at step 1006. If the current VMSC/VLR is a border NPMN VMSC/VLR, the BRG further checks if the previous cell at the HPMN is a bordering cell to the NPMN VMSC or a previous cell at the NPMN is a border cell at the same NPMN VMSC at step 1008. If all these checks are passed, a registration rejection approach is initiated at step 1010, which injects Location Update error messages to the NPMN VLR/VMSC and aborts location update transaction at the HPMN HLR. Otherwise, the SPC routing sends the registration message to the HPMN HLR to update the HPMN HLR at step 1006 without any interference from the BRG.

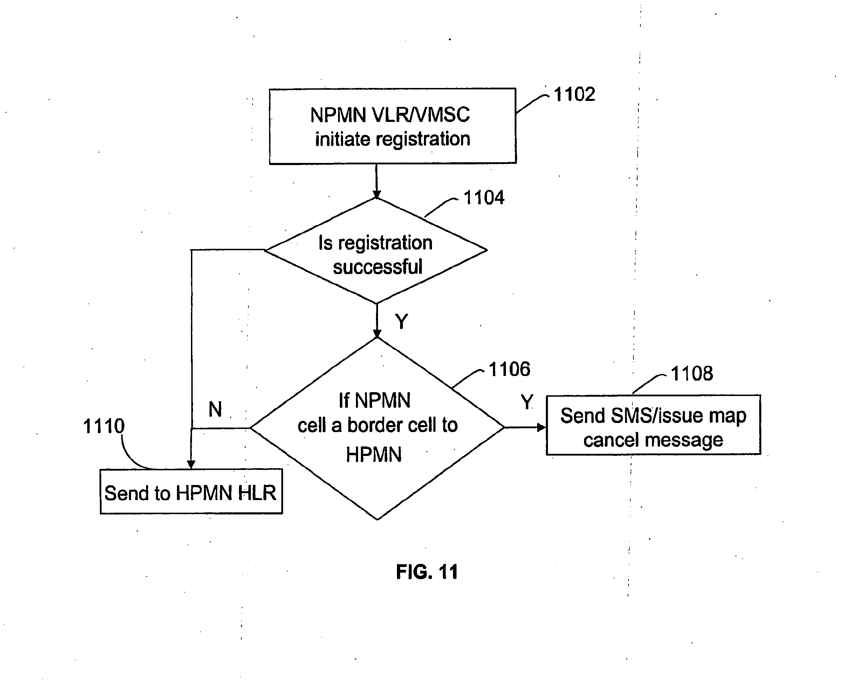

FIG. 11 is a flowchart of an embodiment of the invention illustrating the steps involved in an accept first approach to initiate possible registration rejection. When a subscriber is being registered with an NPMN, it sends a registration message at step 1102. At step 1104, a check is made whether the registration is successful or not. If the registration is successful, the BRG determines if the NPMN cell is a border cell to the HPMN by issuing a MAP command to an NPMN VMSC/VLR (e.g. MAP PSI) at step 1106. This is because current GSM technology does not allow determining the cell-id of the registration from an NPMN at the HPMN prior to the successful registration of the subscriber at the NPMN.

If the BRG discovers the NPMN border cell and the previous HPMN cell to be close or overlapping in the overlap database of border information, it sends a SMS to the subscriber in the NPMN to warn the subscriber that a roaming charge will be charged by the roaming network he/she is currently in and suggests the subscriber to try manually or move physically back to the HPMN, at step 1108. Alternatively, the BRG can also issue a MAP cancel location message to the border NPMN VMSC/VLR to force a re-registration later on, when the mobile is initiating a new activity (e.g. attempting a call). MAP cancel location message can be a GSM MAP CancelLoc command. Alternatively, MAP cancel location message can be a CDMA IS 41 REG-CANCEL command. If the NPMN border cell and the HPMN cell are not found close in the overlap database, the HPMN HLR is updated at step 1110. However, subsequent location update from the subscriber at the same VMSC will be subjected to a rejection approach.

In an embodiment of the invention, the accept-first approach can be coupled with the intercept approach. When the accept-first method is applied to the intercept approach, after the successful registration of the subscriber at the NPMN is allowed by the BRG through to the HPMN HLR, the BRG first finds out the current cell of the subscriber via MAP PSI. It then checks if the previous cell of the subscriber is an HPMN border cell close to the current NPMN cell of the subscriber from the overlap database. If it is, the BRG will send a warning message first to the handset to try to register back to the HPMN. This is optionally followed by MAP CancelLoc to the subscriber's VLR. When the subscriber's LUP comes at the same VMSC/VLR, a rejection approach will be initiated.

In an embodiment of the invention, the accept-first approach can be coupled with the monitoring based approach. When the accept-first method is applied to the monitoring based approach, once the registration at the NPMN is monitored to be successful, the BRG first finds out the current cell of the subscriber via MAP PSI. It then determines whether the previous cell of the subscriber is an H PMN b order c ell to the current cell of the subscriber from the overlap database. If it is, the BRG w ill send a warning message first to the handset to try to register back to the HPMN. This is optionally followed by MAP CancelLoc to the subscriber's VLR. When the same subscriber's LUP comes at the same VMSC/VLR, a rejection approach will be initiated.

### Other Variations

Provided above for the edification of those of ordinary skill in the art, and not as a limitation on the scope of the invention are detailed illustrations of a scheme for detecting and registering an HPMN subscriber in a wireless communication network, who has moved onto an NPMN, back to the HPMN once the HPMN subscriber is detected as being registering with an NPMN even though the HPMN may be present, or an NPMN, with which the HPMN has entered into a contract, could be present in that area. Numerous variations and modifications within the spirit of the present invention will of course occur to those of ordinary skill in the art in view of the embodiments that have now been disclosed. For example, while in the described embodiments, the present invention is implemented primarily from the point of view of GSM mobile networks, the present invention may also be effectively implemented on CDMA, 3G, WCDMA, GPRS, etc., or any other network of common carrier telecommunications in which end users are normally configured to operate within a "home" network to which they normally subscribe, but have the capability of also operating on other neighboring networks.

The examples under the present invention border roaming gateway, detailed in the illustrative examples contained here, are described using terms and constructs drawn largely from GSM mobile telephony infrastructure. But use of these examples should not be interpreted t o limiting the invention t o t hose media. Border Roaming Gateway - a method of registering a subscriber back to home network in a manner that is agnostic to the capabilities of the visited or non-accustomed network can be of use and provided through any type of telecommunications medium, including without limitation: (i) any mobile telephony network including without limitation GSM, 3GSM, 3G, CDMA, WCDMA or GPRS, satellite phones or other mobile telephone networks or systems; (ii) any so-called WiFi apparatus normally used in a home or subscribed network, but also configured for use on a visited or non-home or non-accustomed network, including apparatus not dedicated to telecommunications such as personal computers, Palm-type or Windows Mobile devices,; (iii) an entertainment console platform such as Sony Playstation, PSP or other apparatus that are capable of sending and receiving telecommunications over home or non-home networks, or even (iv) fixed-line devices made for receiving communications, but capable of deployment in numerous locations while preserving a persistent subscriber id such as the eye2eye devices from Dlink; or telecommunications equipment meant for voice over I P communications such as those provided by Vonage or Packet8.

In describing certain embodiments of border roaming gateway under the present invention, this specification follows the path of a telecommunications call from a calling party to a subscriber or calling party. For the avoidance of doubt, that call can be for a normal voice call, in which the subscriber telecommunications equipment is also capable of visual, audiovisual or motion-picture display. Alternatively, those devices or calls can be for text, video, pictures or other communicated data.

### Terminology section

LUP: MAP Location Update
LCAN: MAP Cancel Location
PSI: MAP Provide Subscriber Information
BRG: Border Roaming Gateway
NPMN: Neighboring VPMN

### APPENDIX

| **Acronym** | **Description** |
|---|---|
| 3G | Third generation of mobile |
| ATI | Anv Time Interrogation |
| BSC | Base Station Controller |
| BTS | Base Transceiver Station |
| CAMEL | Customized Application for Mobile Enhanced Logic |
| CDMA | Code Division Multiplexed Access |
| CdPA | Called Party Address |
| CgPA | Calling Party Address |
| DPC | Destination Point Code |
| GMSC | Gateway MSC |
| GPRS | General Packet Radio System |
| GSM | Global System for Mobile |
| GT | Global Title |
| HLR | Home Location Register |
| HPMN | Home Public Mobile Network |
| IMSI | International Mobile Subscriber Identity |
| IN | Intelligent Network |
| INAP | Intelligent Network Application Part |
| ISCP | International SCCP Provider |
| ISD MAP | Insert Subscriber Data message |
| ISUP | ISDN User Part |
| LAPD | Link Access Protocol on the D Channel |
| MAP | Mobile Application Part |
| MCC | Mobile Country Code |
| ME | Mobile Equipment |
| MMS | Multimedia Messaging Service |
| MNC | Mobile Network Code |
| MO | Mobile Originated |
| MSC | Mobile Switching Center |
| MSISDN | Mobile Subscriber ISDN Number |
| MSRN | Mobile Subscriber Roaming Number |
| MT | Mobile Terminated |
| NTR | Network Traffic Redirection Application |
| O-CSI | Originating CAMEL Subscription Information |
| OTA | Over The Air |
| PC | Point Code (also SPC- Signaling Point Code) |
| PSI | Public Subscriber Information |
| RM | Registration Message |
| SCCP | Signaling Connection Control Part |
| SCP | Service Control Point |
| SIM | Subscriber Identity Module |
| SMS | Short Message Service |
| SRI | Send Routing Information |
| SS7 | Signaling System 7 |
| SSN | Sub System Number |
| STP | Signal Transfer Point |
| TAP | Transfer Accounting Procedure |
| TCAP | Transaction Capabilities Application Part |
| T-CSI | Terminating CAMEL Service Information |
| TDMA | Time Division Multiplexed Access; |
| TDOA | Time Difference Of Arrival |
| TR | Traffic Redirection node/network element |
| TT | Translation Type |
| UL MAP | Update Location message |
| URL | Uniform Resource Locater |
| VLR | Visited Location Register |
| VMSC | Visited Mobile Switching Center |
| VPMN | Visited Public Mobile Network |
| WCDMA | Wideband CDMA Access |
| WIB | Wireless Internet Browser (on SIM) |
| WLL | Wireless Local Loop |

## Claims

1. A method for attempting to register a subscriber to a Home Public Mobile Network, wherein the subscriber is in a region having multiple overlapping wireless cellular networks, the method comprising the steps of:
detecting potential registration of the subscriber with a Neighboring visited Public Mobile Network in response to a registration request from the Neighboring visited Public Mobile Network; and
attempting a pre-defined number of rejections upon successful detection,
and **characterised in that** the Home Public Mobile Network may be present in the region and the step of detection includes:
obtaining the location information of the subscriber; and
determining whether the subscriber is located at a border Neighboring visited Public Mobile Network Visited Mobile Switching Centre.

2. The method of claim 1, further comprising maintaining an overlap database at the Home Public Mobile Network, wherein the overlap database stores information about the overlap of network coverage between the Home Public Mobile Network and the Neighboring visited Public Mobile Network.

3. The method of claim 1, wherein the location information comprises one or more of Visited Mobile Switching Centre, cell-id, Global Positioning System coordinates.

4. The method of claim 1, wherein the step of detection further includes determining whether the subscriber was located at an Home Public Mobile Network border Visited Mobile Switching Centre prior to moving to a border Neighboring visited Public Mobile Network Visited Mobile Switching Centre.

5. The method of claim 1 or 3, wherein the step of detection includes determining whether the subscriber was located at an Home Public Mobile Network border cell prior to moving to a border Neighboring visited Public Mobile Network Visited Mobile Switching Centre.

6. The method of claim 1 or 3, wherein the step of detection includes determining whether the subscriber was located at another border Neighboring visited Public Mobile Network cell in the same Neighboring visited Public Mobile Network Visited Mobile Switching Centre prior to moving to the current border Neighboring visited Public Mobile Network cell.

7. The method of any of the preceding claims, further comprising determining the registration message is E214 Called Party Address based Signalling Connection Control Part message.

8. The method of any of claims 1 to 6 wherein the registration message is a location update message.

9. The method of any of the preceding claims, wherein the wireless cellular networks is selected from a group of networks including Global System for Mobile communication and Code Division Multiple Access.

10. A border roaming gateway (126) for attempting to register a subscriber to a Home Public Mobile Network, wherein the subscriber is in a region having multiple overlapping wireless cellular networks, the border roaming gateway comprising:
detection block for detecting potential registration of the subscriber with a Neighboring visited Public Mobile Network in response to a registration request from the Neighboring visited Public Mobile Network; and
processing block for attempting a pre-defined number of rejections upon successful detection,
and **characterised in that** the Home Public Mobile Network may be present in the region and detecting potential registration includes:
obtaining the location information of the subscriber; and
determining whether the subscriber is located at a border Neighboring visited Public Mobile Network Visited Mobile Switching Centre.

11. The border roaming gateway of claim 10, wherein the detection block comprises of an overlap database at the Home Public Mobile Network for storing information about the overlap of network coverage between the Home Public Mobile Network and the Neighboring visited Public Mobile Network.

12. The border roaming gateway of claim 10 or 11, wherein the border roaming gateway is connected to a signal transfer point (116) for intercepting a registration message.

13. The border roaming gateway of any of claims 10 to 12, wherein the border roaming gateway is connected to storage means for initiating rejection of the registration request of the Neighboring visited Public Mobile Network.

14. The border roaming gateway of any of claims 10 to 13, wherein the border roaming gateway monitors a registration message between an Neighboring visited Public Mobile Network Visited Mobile Switching Centre\Visited Location Register and a Home Public Mobile Network Signal Transfer Point or Home Location Register.

15. The border roaming gateway of claim 14, wherein the border roaming gateway monitors the registration message between the Neighboring visited Public Mobile Network Visited Mobile Switching Centre\ Visited Location Register and a base station controller using an A-interface.

16. The border roaming gateway of claim 14, wherein the border roaming gateway monitors the registration message between a base station controller and the base transceiver station using an Abisinterface..

17. The border roaming gateway of claim 11, wherein the information about the overlap of network coverage in the overlap database is selected from a group consisting of Neighboring visited Public Mobile Network Visited Mobile Switching Centre and Home Public Mobile Network Visited Mobile Switching Centre.

18. The border roaming gateway of claim 11, wherein the information about the overlap of network coverage in border roaming gateway the overlap database is selected from a group consisting of Neighboring visited Public Mobile Network cell-id and Home Public Mobile Network cell-id.

19. The border roaming gateway of claim 11, wherein the information about the overlap of network coverage in the overlap database is selected from a group consisting of Neighboring visited Public Mobile Network Visited Mobile Switching Centre, Home Public Mobile Network Visited Mobile Switching Centre, Neighboring visited Public Mobile Network cell-id and Home Public Mobile Network cell-id.

20. The border roaming gateway of any of claims 10 to 19, wherein the registration message is a location update message.

21. The border roaming gateway of any of claims 10 to 20, wherein the wireless cellular networks is selected from a group of networks including Global System for Mobile communication and Code Division Multiple Access.

22. The border roaming gateway of claim 13, wherein the storage means is Home Location Register (118).

23. The border roaming gateway of claim 11, wherein the detection block further comprises of a border subscriber database for maintaining a record of Home Public Mobile Network subscribers at border cells of the Home Public Mobile Network.

## Patentansprüche

1. Verfahren zum Versuchen des Registrierens eines Teilnehmers in einem Home Public Mobile Network, wobei der Teilnehmer sich in einer Region befindet, die mehrere sich überschneidende drahtlose Mobilfunknetze aufweist, wobei das Verfahren die folgenden Schritte umfasst:
Ermitteln einer möglichen Registrierung des Teilnehmers bei einem benachbarten Visited Public Mobile Network als Reaktion auf eine Registrierungsaufforderung vom benachbarten Visited Public Mobile Network; und
Versuchen einer vordefinierten Anzahl von Zurückweisungen bei erfolgreicher Ermittlung,
und **dadurch gekennzeichnet, dass** das Home Public Mobile Network in der Region vorhanden sein kann und der Ermittlungsschritt Folgendes umfasst:
Erhalten der Lageinformationen des Teilnehmers; und
Bestimmen, ob der Teilnehmer sich in einem Visited Mobile Switching Centre eines angrenzenden benachbartem Visited Public Mobile Networks befindet.

2. Verfahren nach Anspruch 1, das ferner das Pflegen einer Überschneidungsdatenbank am Home Public Mobile Network umfasst, wobei die Überschneidungsdatenbank Informationen über die Überschneidung der Netzabdeckung zwischen dem Home Public Mobile Network und dem benachbarten Visited Public Mobile Network speichert.

3. Verfahren nach Anspruch 1, wobei die Lageinformationen eines oder mehreres von Visited Mobile Switching Centre, Cell-ID, Global Positioning System Koordinaten umfasst.

4. Verfahren nach Anspruch 1, wobei der Schritt des Ermittelns ferner das Bestimmen, ob der Teilnehmer sich vor der Bewegung zu einer Visited Mobile Switching Centre eines angrenzenden benachbarten Visited Public Mobile Networks an einer angrenzenden Visited Mobile Switching Centre eines Home Public Mobile Networks befand, umfasst.

5. Verfahren nach Anspruch 1 oder 3, wobei der Schritt des Ermittelns das Bestimmen, ob der Teilnehmer sich vor der Bewegung zu einer Visited Mobile Switching Centre eines angrenzenden benachbarten Visited Public Mobile Networks an einer Grenzzelle eines Home Public Mobile Networks befand, umfasst.

6. Verfahren nach Anspruch 1 oder 3, wobei der Schritt des Ermittelns das Bestimmen, ob der Teilnehmer sich vor der Bewegung zur gegenwärtigen Grenzzelle des benachbarten Visited Public Mobile Networks an einer anderen Grenzzelle des benachbarten Visited Public Mobile Networks in derselben Visited Mobile Switching Centre des benachbarten Visited Public Mobile Networks befand, umfasst.

7. Verfahren nach einem der vorhergehenden Ansprüche, das ferner das Bestimmen, ob die Registrierungsnachricht eine E214 Called Party Address basierte Signalling Connection Control Part Nachricht ist, umfasst.

8. Verfahren nach einem der Ansprüche 1 bis 6, wobei die Registrierungsnachricht eine Location Update Nachricht ist.

9. Verfahren nach einem der vorhergehenden Ansprüche, wobei das drahtlose Mobilfunknetz von einer Gruppe von Netzen ausgewählt wird, die Global System for Mobile Communication und Code Division Multiple Access umfassen.

10. Border Roaming Gateway (126) zum Versuchen des Registrierens eines Teilnehmers in einem Home Public Mobile Network, wobei der Teilnehmer sich in einer Region befindet, die mehrere sich überschneidende drahtlose Mobilfunknetze aufweist, wobei das Border Roaming Gateway Folgendes umfasst:
einen Ermittlungsblock zum Ermitteln einer möglichen Registrierung des Teilnehmers bei einem benachbarten Visited Public Mobile Network als Reaktion auf eine Registrierungsaufforderung vom benachbarten Visited Public Mobile Network; und
einen Verarbeitungsblock zum Versuchen einer vordefinierten Anzahl von Zurückweisungen bei erfolgreicher Ermittlung,
und **dadurch gekennzeichnet, dass** das Home Public Mobile Network in der Region vorhanden sein kann und das Ermitteln der möglichen Registrierung Folgendes umfasst:
Erhalten der Lageinformationen des Teilnehmers; und
Bestimmen, ob der Teilnehmer sich in einem Visited Mobile Switching Centre eines angrenzenden benachbarten Public Mobile Networks befindet.

11. Border Roaming Gateway nach Anspruch 10, wobei der Ermittlungsblock eine Überschneidungsdatenbank an dem Home Public Mobile Network zum Speichern von Informationen über die Überschneidung der Netzabdeckung zwischen dem Home Public Mobile Network und dem benachbarten Visited Public Mobile Network umfasst.

12. Border Roaming Gateway nach Anspruch 10 oder 11, wobei das Border Roaming Gateway mit einem Signal Transfer Point (116) zum Abfangen einer Registrierungsnachricht verbunden ist.

13. Border Roaming Gateway nach einem der Ansprüche 1 bis 12, wobei das Border Roaming Gateway mit Speichermitteln zum Einleiten der Zurückweisung der Registrierungsaufforderung des benachbarten Visited Public Mobile Networks verbunden ist.

14. Border Roaming Gateway nach einem der Ansprüche 10 bis 13, wobei das Border Roaming Gateway eine Registrierungsnachricht zwischen einem Visited Mobile Switching Centre/Visitor Location Register eines benachbarten Visited Public Mobile Networks und einem Home Public Mobile Network Signal Transfer Point oder einem Home Location Register überwacht.

15. Border Roaming Gateway nach Anspruch 14, wobei das Border Roaming Gateway die Registrierungsmeldung zwischen dem Visited Mobile Switching Centre/Visitor Location Register des benachbarten Visited Public Mobile Networks und einer Basisstationssteuerung unter Verwendung einer A-Schnittstelle überwacht.

16. Border Roaming Gateway nach Anspruch 14, wobei das Border Roaming Gateway die Registrierungsnachricht zwischen einer Basisstationssteuerung und der Base Transceiver Station unter Verwendung einer Abis-Schnittstelle überwacht.

17. Border Roaming Gateway nach Anspruch 11, wobei die Informationen über die Überschneidung der Netzabdeckung in der Überschneidungsdatenbank von einer Gruppe ausgewählt werden, die aus dem Visited Mobile Switching Centre des benachbarten Visited Public Mobile Networks und dem Visited Mobile Switching Centre des Home Public Mobile Networks besteht.

18. Border Roaming Gateway nach Anspruch 11, wobei die Informationen über die Überschneidung der Netzabdeckung in der Überschneidungsdatenbank von einer Gruppe ausgewählt werden, die aus der Cell-ID des benachbarten Visited Public Mobile Networks und der Cell-ID des Home Public Mobile Networks besteht.

19. Border Roaming Gateway nach Anspruch 11, wobei die Informationen über die Überschneidung der Netzabdeckung in der Überschneidungsdatenbank von einer Gruppe ausgewählt werden, die aus dem Visited Mobile Switching Centre des benachbarten Visited Public Mobile Networks, dem Visited Mobile Switching Centre des Home Public Mobile Networks, der Cell-ID des benachbarten Visited Public Mobile Networks und der Cell-ID des Home Public Mobile Networks besteht.

20. Border Roaming Gateway nach einem der Ansprüche 10 bis 19, wobei die Registrierungsnachricht eine Location Update Nachricht ist.

21. Border Roaming Gateway nach einem der Ansprüche 10 bis 20, wobei das drahtlose Mobilfunknetz von einer Gruppe von Netzen ausgewählt ist, die Global System for Mobile Communication und Code Division Multiple Access umfasst.

22. Border Roaming Gateway nach Anspruch 13, wobei das Speichermittel ein Home Location Register (118) ist.

23. Border Roaming Gateway nach Anspruch 11, wobei der Ermittlungsblock ferner eine Grenzteilnehmer-Datenbank zum Pflegen eines Datensatzes von Home Public Mobile Network Teilnehmern an Grenzzellen des Home Public Mobile Networks umfasst.

## Revendications

1. Procédé pour tenter d'inscrire un abonné à un réseau public de téléphonie mobile domestique, dans lequel l'abonné se trouve dans une région ayant de multiples réseaux cellulaires sans fil qui se chevauchent, le procédé comprenant les étapes consistant à :
détecter une inscription potentielle de l'abonné auprès d'un réseau public de téléphonie mobile visité voisin en réponse à une demande d'inscription du réseau public de téléphonie mobile voisin visité ; et
tenter un nombre prédéfini de rejets lors d'une détection satisfaisante, et
**caractérisé en ce que** le réseau public de téléphonie mobile domestique peut être présent dans la région,
et l'étape de détection comprend les étapes consistant à :
obtenir les informations de localisation de l'abonné ; et
déterminer si l'abonné est localisé dans un centre de commutation de téléphonie mobile visité d'un réseau public de téléphonie mobile voisin visité frontalier.

2. Procédé selon la revendication 1, comprenant en outre le maintien d'une base de données de chevauchement dans le réseau public de téléphonie mobile domestique, dans lequel la base de données de chevauchement stocke des informations sur le chevauchement de couverture entre le réseau public de téléphonie mobile domestique et le réseau public de téléphonie mobile voisin visité.

3. Procédé selon la revendication 1, dans lequel les informations de localisation comprennent une ou plusieurs des coordonnées du centre de commutation de téléphonie mobile visité, du centre de commutation cellulaire et du système de positionnement global.

4. Procédé selon la revendication 1, dans lequel l'étape de détection comprend par ailleurs l'étape consistant à déterminer si l'abonné a été localisé dans un centre de commutation de téléphonie mobile visité frontalier du réseau public de téléphonie mobile domestique avant de se déplacer vers un centre de commutation de téléphonie mobile visité de réseau public de téléphonie mobile voisin visité.

5. Procédé selon la revendication 1 ou la revendication 3, dans lequel l'étape de détection comprend l'étape consistant à déterminer si l'abonné a été localisé dans une cellule frontalière de réseau public de téléphonie mobile domestique avant de se déplacer vers un centre de commutation de téléphonie mobile visité d'un réseau public de téléphonie mobile voisin visité frontalier.

6. Procédé selon la revendication 1 ou la revendication 3, dans lequel l'étape de détection comprend l'étape consistant à déterminer si l'abonné a été localisé dans une autre cellule de réseau public de téléphonie mobile voisin visité frontalier dans le même centre de commutation de téléphonie mobile visité de réseau public de téléphonie mobile voisin visité avant de se déplacer vers la cellule de réseau public de téléphonie mobile voisine visitée frontalière courante.

7. Procédé selon l'une quelconque des revendications précédentes, comprenant par ailleurs l'étape consistant à déterminer que le message d'inscription est un message de partie de commande de connexion de signalisation sur la base de l'adresse de partie dénommée E214.

8. Procédé selon l'une quelconque des revendications 1 à 6, dans lequel le message d'inscription est un message de mise à jour de la localisation.

9. Procédé selon l'une quelconque des revendications précédentes, dans lequel le réseau cellulaire sans fil est choisi dans un groupe de réseaux comprenant le système global de communication mobile et l'accès multiple par différence de code.

10. Passerelle frontière d'itinérance (126) pour tenter d'inscrire un abonné dans un réseau public de téléphonie mobile domestique, dans lequel l'abonné se trouve dans une région ayant de multiples réseaux cellulaires sans fil qui se chevauchent, la passerelle frontière d'itinérance comprenant :
un bloc de détection pour détecter une inscription potentielle de l'abonné auprès d'un réseau public de téléphonie mobile voisin visité en réponse à une demande d'inscription du réseau public de téléphonie mobile voisin visité ; et
un bloc de traitement pour tenter un nombre prédéfini de rejets lors d'une détection satisfaisante, et
**caractérisé en ce que** le réseau public de téléphonie mobile domestique peut être présent dans la région et la détection d'une inscription potentielle comprend les étapes consistant à :
obtenir les informations de localisation de l'abonné ; et
déterminer si l'abonné se trouve dans un centre de commutation de téléphonie mobile visité de réseau public de téléphonie mobile voisin visité frontalier.

11. Passerelle frontière d'itinérance selon la revendication 10, dans laquelle le bloc de détection est constitué d'une base de données à chevauchement dans le réseau public de téléphonie mobile domestique pour stocker des informations sur le chevauchement de la couverture réseau entre le réseau public de téléphonie mobile domestique et le réseau public de téléphonie mobile voisin visité.

12. Passerelle frontière d'itinérance selon la revendication 10 ou la revendication 11, dans laquelle la passerelle frontière d'itinérance est raccordée à un point de transfert de signal (116) pour intercepter un message d'inscription.

13. Passerelle frontière d'itinérance selon l'une quelconque des revendications 1 à 12, dans laquelle la passerelle frontière d'itinérance est raccordée à des moyens de stockage pour initier le rejet de la demande d'inscription du réseau public de téléphonie mobile voisin visité.

14. Passerelle frontière d'itinérance selon l'une quelconque des revendications 10 à 13, dans laquelle la passerelle frontière d'itinérance contrôle un message d'inscription entre un centre de commutation de téléphonie mobile visité de réseau public de téléphonie mobile voisin visité ou un registre de localisation visité et un point de transfert de signal de réseau public de téléphonie mobile domestique ou un registre de localisation domestique.

15. Passerelle frontière d'itinérance selon la revendication 14, dans laquelle la passerelle frontière d'itinérance contrôle le message d'inscription entre le centre de commutation de téléphonie mobile visité du réseau public de téléphonie mobile voisin visité ou le registre de localisation visité et un contrôleur de station de base utilisant une interface A.

16. Passerelle frontière d'itinérance selon la revendication 14, dans laquelle la passerelle frontière d'itinérance contrôle le message d'inscription entre un contrôleur de station de base et la station d'émission-réception de base en utilisant une interface Abis.

17. Passerelle frontière d'itinérance selon la revendication 11, dans laquelle les informations sur le chevauchement de la couverture réseau dans la base de données de chevauchement sont choisies dans un groupe constitué du centre de commutation de téléphonie mobile visité du réseau public de téléphonie mobile voisin visité et du centre de commutation de téléphonie mobile visité du réseau public de téléphonie mobile domestique.

18. Passerelle frontière d'itinérance selon la revendication 11, dans laquelle les informations sur le chevauchement de la couverture réseau dans la base de données de chevauchement sont choisies dans un groupe constitué d'un identificateur de cellule de réseau public de téléphonie mobile voisin visité et d'un identificateur de cellule de réseau public de téléphonie mobile domestique.

19. Passerelle frontière d'itinérance selon la revendication 11, dans laquelle les informations sur le chevauchement de la couverture réseau dans la base de données de chevauchement sont choisies dans un groupe constitué du centre de commutation de téléphonie mobile visité du réseau public de téléphonie mobile voisin visité, du centre de commutation de téléphonie mobile visité du réseau de téléphonie mobile domestique, de l'identifiant cellulaire du réseau public de téléphonie mobile voisin visité et de l'identifiant cellulaire du réseau public de téléphonie mobile domestique.

20. Passerelle frontière d'itinérance selon l'une quelconque des revendications 10 à 19, dans laquelle le message d'inscription est un message de mise à jour de localisation.

21. Passerelle frontière d'itinérance selon l'une quelconque des revendications 10 à 20, dans laquelle le réseau cellulaire sans fil est choisi dans un groupe de réseaux comprenant le système global de communication mobile et l'accès multiple par différence de code.

22. Passerelle frontière d'itinérance selon la revendication 13, dans laquelle le moyen de stockage est le registre domestique de localisations (118).

23. Passerelle frontière d'itinérance selon la revendication 11, dans laquelle le bloc de détection est constitué par ailleurs d'une base de données d'abonnés frontaliers pour maintenir un enregistrement des abonnés du réseau public mobile de téléphonie domestique dans des cellules frontalières du réseau public de téléphonie mobile domestique.
